# EUROPEAN PATENT SPECIFICATION

(11) **EP 4 451 639 B1**
(45) Date of publication and mention of the grant of the patent: **03.12.2025**
(21) Application number: 23168598.3
(22) Date of filing: 18.04.2023
(51) Int. Cl.: H04L 47/22, H04L 47/625, H04L 47/629

(54) **APPARATUS AND METHOD FOR ALLOCATING BANDWIDTH**
VORRICHTUNG UND VERFAHREN ZUR BANDBREITENZUWEISUNG
APPAREIL ET PROCÉDÉ D'ATTRIBUTION DE BANDE PASSANTE

(43) Date of publication of application: 23.10.2024
(73) Proprietor: Nokia Solutions and Networks Oy, 02610 Espoo (FI)
(72) Inventor: DROOGHAAG, Benoit, Ophain-Bois-Seigneur-Isaac (BE); BOSTOEN, Tom, Antwerp (BE)
(74) Representative: Loyer & Abello

(56) References cited:
- EP-A1- 4 030 708

## Description

### Field of the invention

The disclosure relates to bandwidth allocation in a communications network, specifically to determining of scheduler parameters and/or maximum bandwidth parameters.

### Background

The sharing of bandwidth in a communications network between multiple clients is typically handled by Weighted Fair Queue (WFQ) scheduler components. In this sharing scheme, a weight is given to each client. Each of them will receive a fraction of the total bandwidth which is proportional to their weight. By design, if any client would not be active or not request his entitled bandwidth fraction, this "free" or spare bandwidth is automatically distributed among the active clients, proportionally to the weights of those active clients. In worst case, the minimum bandwidth that each client will receive is equal to the total bandwidth multiplied by the ratio of its weight over the sum of the weights of all the clients. In best case, if there would be only one active client at a certain time, this client would get the full bandwidth.

However, in case of one or more abnormally high demanding or even potentially abusing users, these mechanisms tend to discriminate the other users. Such situations may happen when residential subscribers would host unusual services creating very high bandwidth request for example in case of P2P storage networks, when a user downloads a high data volume, such as a game, or when a company would clearly abuse a residential subscription to offer commercial services.

EP4030708A1 discloses a method and apparatus for allocating bandwidth in a communications network. A scheduler weight and a shaper rate serve to allocate bandwidth to network participants based on their historical bandwidth utilization and an indication of network contention. The system allocates bandwidth to participants by reducing their respective scheduler weight and/ or shaper rate, in case of a long-lasting high consumption effectively reducing the rate or weight attributed to a heavy user, thus slowing down his data consumption.

### Summary of the Invention

Aspects of the invention aim at coping improvingly with the problem of assuring a fair distribution of data volume while avoiding penalizing, or even speeding up the download the heavy user might perform. The invention provides an apparatus for allocating bandwidth per claim 1, corresponding method claim 14 and computer program product claim 15. Dependent claims describe further embodiments of the invention.

Accordingly the bandwidth allocated to the participant of the network meeting an intensive capacity consumption condition can be dynamically adjusted according to the available resource as well as the historical behavior of the participants, optimizing his user experience by guarantying a full capacity data volume while providing all the other users with adequate data volumes, allowing a second participant to simultaneously run a successful speed test. Thus, a closed-loop automation is provided, and a long-term fairness can be guaranteed.

### Brief description of the drawings

For a more complete understanding of example embodiments of the present invention, reference is now made to the following descriptions taken in connection with the accompanying drawings in which:
Figure 1 shows a part of an exemplifying communications network in which examples of disclosed apparatuses and methods for allocating bandwidth may be applied;
Figure 2 shows a functional block diagram according to one example embodiment of a passive optical network in which examples of disclosed apparatuses and methods for allocating bandwidth may be applied;
Figure 3 shows a flow diagram according to an example implementation of apparatuses and methods for allocating bandwidth;
Figure 4 is a graph showing a bandwidth utilization result according to an example embodiment;
Figure 5 shows a functional block diagram according to another example embodiment of a passive optical network in which examples of disclosed apparatuses and methods for allocating bandwidth may be applied;
Figure 6 shows a functional block diagram according to another example embodiment of a passive optical network in which examples of disclosed apparatuses and methods for allocating bandwidth may be applied;
Figure 7 shows a block diagram depicting the apparatus operating in accordance with an example embodiment;
Figure 8 shows an example method incorporating aspects of the example embodiments.

### Detailed description of embodiments

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, the method steps may be performed in other possible sequences. Similarly, specific structural and functional details disclosed herein are merely representative for purposes of describing the embodiments. The invention described herein, however, may be embodied in many alternate forms and should not be construed as limited to only the embodiments set forth herein.

The state of the art displays a technology that aims to improve the efficiency of bandwidth allocation in communications networks, particularly in scenarios where there are multiple users or devices competing for limited bandwidth resources. The method involves receiving requests for bandwidth from multiple users or devices and determining an overall bandwidth allocation for each user or device. Based on this information, the system allocates bandwidth resources in a way that maximizes the overall efficiency of the network. The prior art does so by measuring the PON every 5 minutes. Based on this measurement the PON, congestion risk is predicted. If there is a congestion risk, then the solution detects a heavy user based on the measurement of the individual subscriber data usage per 5 minutes. If a heavy user is detected, his scheduler weight is preventively reduced, for example, from 1 to 0.1. The heavy user experiences a small (e.g. 0.2%) increase of the download time if congestion occurs during his download. Thus, the state of the art does not allow for maintenance of a sufficient data volume to all users while guarantying the heavy user a decreased download time.

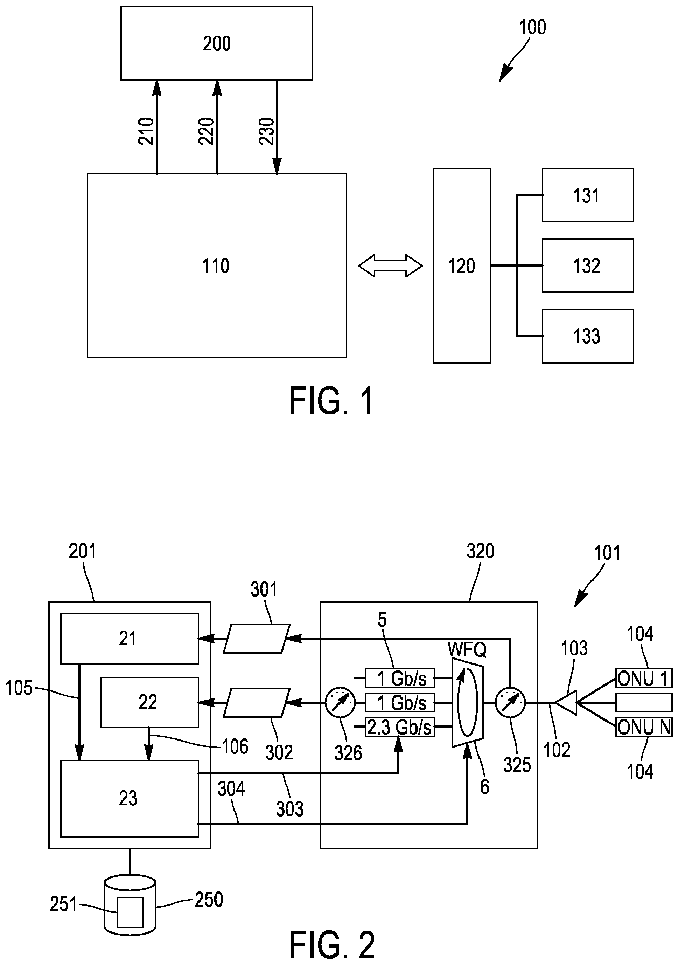

Figure 1 shows a part of an exemplifying communications network in which examples of disclosed embodiments may be applied. It is apparent to a person skilled in the art that the communications network typically comprises also other functions and structures than those shown in Figure 1.

The communications network 100 may be a fibre network. Alternatively, it may also be a cable network, e.g. a mobile network or any combination of both fixed and wireless network. Generally, the communications network 100 may be any shared medium communications network.

In general, the communications network 100 includes a network controller 110 that is connected via communications to a network node 120. Additionally, the communications network 100 consists of several network participants 131, 132, 133 that are linked to the network node 120. While Fig.1 only displays one network node 120, it should be noted that there could be more than one network node 120 in the communications network 100. The network controller 110 is designed to monitor the bandwidth usage of network participants 131, 132, 133 and grants the network operator who manages the communications network 100 visibility and control over the network participants.

Not shown on Figure 1, a Weighted Fair Queue scheduler and a traffic shaper may be implemented in the network node 120 in connection with the plurality of network participants 131, 132, 133, to adjust the bandwidth allocated to respective ones of the plurality of network participants 131, 132, 133. Those Weighted Fair Queue scheduler and traffic shaper will be further discussed.

An instance of the communications network 100 may represent a conventional access network, where a sole network operator possesses the access network nodes 120 and whereby the network controller 110 offers oversight and management of all network participants 131, 132, 133 connected to the access network nodes 120. Within this embodiment, the network subscribers 131, 132, 133 of the access network 100 belong to the sole network operator.

In another example embodiment, the communications network 100 may refer to a virtual access network (or network slice) operated by a VNO who is buying/renting a part of the resources of the access network nodes 120 to an Infrastructure Provider (InP). In this example embodiment, the participants 131, 132, 133 of the virtual access network 100 are subscribers of the VNO.

In this operating mode, the access network node 120 may be shared by multiple VNOs, but the network controller 110 provides visibility and control only to the VNOs for their own subscribers. From the perspective of a VNO, the network controller 110 provides only a partial view of the access node 120, limited to the interfaces where their subscribers are connected, which is sometimes called a virtual access node. Another example embodiment of the communications network 100 involves a network of virtual access networks, which are operated by an InP that lends or resells access node resources to one or more VNOs. In this embodiment, the participants 131, 132, 133 of the network of virtual access networks 100 are VNOs.

In this mode, it must be understood that the network controller 110 provides visibility and control to the InP on the network participants 131, 132, 133, namely the VNOs, but not on the subscribers of those VNOs.

The network controller 110 is configured to communicate with the apparatus 200 implementing example embodiments of the present application, by providing input data 210, 220 to the apparatus 200 and receiving output data 230 from the apparatus 200.

A skilled person shall understand that although the apparatus 200 is shown in Figure 1 as separated from the network controller 110, in another example implementation it may be implemented as part of the network controller 110.

The apparatus 200 is configured to obtain an indication of contention of the communications network 100. The indication of contention may be a parameter indicating whether or not the communications network 100 is in a state of contention or at risk of entering such a state of contention, e.g. based on quantitative measurements and/or predictions of risk of contention.

Specifically, in one example implementation, the apparatus 200 may comprise means, which are further configured to determine or predict a risk of contention as a ratio of time, during which the bandwidth utilized by the participants of the network causes a contention.

More specifically, in one example, based on the actual total bandwidth utilization of all the active network participants in the communications network during a predetermined time period, for example 5 minutes, the risk of contention is determined as a ratio of aggregated time interval(s) to the predetermined time period, during the time interval(s) the bandwidth utilized by the plurality of network participants is above a predetermined threshold, for example 95% of the total available bandwidth.

The risk of contention is used to monitor how close is the actual bandwidth utilization to the total link capacity (or how close is the link to contention). In other words, the risk of contention is used to monitor the remaining available bandwidth that the WFQ scheduler can still distribute to any participant of the network creating an extra demand (for example doing a speed test). Due to the gaming or other variable bandwidth type of application, it is advantageous to monitor this remaining capacity over short periods of time, typically in the order of magnitude of user perception (in seconds). Depending on the desired loop reaction time, the risk of contention may be expressed as a ratio of a larger time period (e.g. contention of 1% during the last 5 minutes).

It is advantageous that the risk of contention is determined in the network controller 110. However, as for determining the risk of contention, the throughput is monitored at fast pace (order of magnitude of a few seconds) and an aggregate is calculated over a longer time interval (percentage of contention in the last 5 minutes), if it would not be possible to stream the throughput measurement from the access network node 120 to the network controller 110 fast enough, the risk of contention may also be determined in the access network nodes 120 itself. In this case, only the aggregated contention level is streamed to the network controller 110.

The apparatus 200 is further configured to obtain a historical bandwidth utilization indication parameter of respective participants 131, 132, 133 of the communications network 100.

Specifically, in one example implementation, the apparatus 200 may comprise means which are further configured to obtain the historical bandwidth utilization indication as indicating historical bandwidth consumption of respective ones of the participants 131, 132, 133 of the communications network 100 over at least one time window, advantageously over a plurality of time windows. For example, the network controller 110 or the access network nodes 120 may determine, for every participant of the network, the actual bandwidth utilization over the last 5 minutes, last 15 minutes, last 1h, last 4h, last day, last week, last month, etc.

The apparatus 200 is further configured to determine whether a or each participant meets an intensive capacity consumption condition based on the historical bandwidth utilization indication, at least when contention exists in the communications network 100.

The apparatus 200 is further configured to provide a reduced value of a scheduler parameter and an increased value of a maximum bandwidth parameter to an output of the apparatus 200, wherein the scheduler parameter and the maximum bandwidth parameter are related to allocating bandwidth to the participant meeting the intensive capacity consumption condition.

The advantage brought by the example embodiments is that the bandwidth allocated to the participant meeting an intensive capacity consumption condition can be adjusted to guarantee the appropriate bandwidth to other network participants without penalizing the participant meeting an intensive capacity consumption, i.e. by optimizing its download time.

In an advantageous embodiment, the apparatus 200 is further configured to repeat the obtaining of the indication of contention; the obtaining of the historical bandwidth utilization indication parameter and the determining, whether a or each participant meets the intensive capacity consumption condition. The predetermined time interval for repetition may relate to how often the indication of contention or the historical bandwidth utilization is updated.

In one example embodiment, the scheduler parameter indicates a weight corresponding to the participant of the communications network 100 for use in a Weighted Fair Queue scheduler, and the shaper parameter indicates a limit of the bandwidth allocated to the participants of the communications network 100.

More specifically, for example, the weights may be represented either as floating numbers between 0 and 1, or by integers ranging from 0 to a maximum value that depends on the quantification (e.g. 255 for 8 bits quantification). The maximum bandwidth parameter may be expressed directly as data throughputs (bps, kbps, Mbps, Gbps, etc). In an embodiment, the maximum bandwidth parameter is a shaper parameters.

A skilled person shall understand that the scheduler parameters and/or maximum bandwidth parameters may be updated periodically for each participant 131, 132, 133 of the communications network 100, under the condition that they meet an intensive capacity consumption condition when the communications network 100 is in a state of contention or at risk of entering such a state of contention.

Figure 2 shows a functional block diagram according to one example embodiment of passive optical network 101 employing an apparatus 201 for bandwidth allocation.

In a known manner, the passive optical network 101 includes an access node 320, known as optical line termination (OLT), a plurality of terminals 104, known as Optical Network Units (ONU) which are near end-users, and an optical fiber 102 which carriers the multiplexed upstream and downstream traffic of the terminals 104. An optical splitter 103 splits the downstream traffic from and merges the upstream traffic to the optical fiber 102.

The access node 320 comprises a WFQ scheduler 6 for allocating downstream bandwidth to the terminals 104 as a function of their individually allocated weights. The access node 320 also comprises traffic shaper 5 for each one of the terminals 104. The traffic shaper 5 imposes a maximum downstream data-rate that a given terminal 104 may consume at a given instant.

Preconfigured values of the scheduler parameter i.e. weight, and shaper parameter i.e. maximum data rate allocated to each terminal 104 may be stored in a configuration file 251 stored in a network management apparatus 250.

In the embodiment depicted in Figure 2, the apparatus 201 includes a contention module 21 for determining whether the optical network 101 is in a state of contention or at risk of entering such a state of contention, a heavy-use determination module 22 for identifying the or each participant meeting an intensive capacity consumption condition as well as the rule(s) that were violated by those users, and a regulation engine 23 that takes in the indication of contention 105 from the contention module 21 and the identity 106 of the or each heavy user, if any, from the heavy-use determination module 22.

The contention module 21 obtains network-level consumption data 301 from the access node 320, e.g. the available bandwidth that the WFQ scheduler 6 can still allocate to any participant in the network 101. For that purpose, the access node 320 includes a measurement module 325. The network-level consumption may be measured every 5 minutes. The contention module 21 emits the indication of contention 105 in response to determining that the network is in a state of contention or at risk. In an embodiment, the indication of contention 105 is emitted when risk of contention is determined to exceed a given threshold, e.g. 80%.

The heavy-use determination module 22 obtains historical bandwidth utilization data 302 of each individual network participants from the access node 320. For example, the historical bandwidth utilization data 302 includes measurements of the individual network participant data usage per 5 minutes. For that purpose, the access node 320 includes a measurement module 326 for every user.

The historical bandwidth utilization data 302 can be measured using sliding windows. Each measurement signal is based on a different sliding window. Such a measurement signal consists of the data volume consumed by a participant during the given sliding window. This data volume is determined by a sliding-window integrator. By taking the history of the subscriber data rate into account, the heavy-use determination module 22 can ensure fairness between participants over the longer term.

The heavy-use determination module 22 tests an intensive consumption condition for each terminal 104. For example the intensive capacity consumption condition can be defined as follows: each measurement signal is compared with a constant reference data volume. If the data volume consumed during the sliding window exceeds the reference data volume, then the participant is deemed to meet the intensive capacity consumption condition.

The regulation engine 23 of the depicted embodiment in Figure 2 processes the indication of contention 105 and the results provided by the heavy-use determination module 22. The regulation engine 23 then feeds a reduced scheduler parameter 304 to the WFQ scheduler 6 and an increased shaper parameter 303 to the shaper filter 5 for each respective participant meeting the intensive capacity consumption condition while the network is subject to contention.. The reduced scheduler parameter 304 and the increased shaper parameter 303 of the participant may be defined by configuration data also present in the configuration file 251. The reduced scheduler parameter 304 and the increased shaper parameter 303 of the participant may be defined as absolute parameter values or as increments.

In other words, the regulation engine 23 reduces the WFQ scheduler weight and increases the shaper limit of a participant meeting an intensive capacity consumption when the network is at risk of being congested. This ensures that the other participants are still provided with adequate bandwidth, while avoiding penalizing the user meeting the intensive capacity consumption by over-limiting the bandwidth allocated to him.

In one example implementation, the network-level consumption data 301 and historical bandwidth utilization data 302 can be obtained by the apparatus 201 and stored in its memory, also known as a data lake. The regulation engine 23 can be implemented as a virtual network function (VNF), which is software implemented in a network controller, reading data from the data lake and pushing back new configuration parameters (scheduler parameter and shaper parameter) directly to the corresponding WFQ scheduler 6 and shaper filter 5.

The contention module 21 and heavy-use determination module 22 repeat the same operations after a time period, for example 5 minutes. When the regulation engine 23 determines that a state of contention has ceased and/or the identified participant has ceased to meet the condition, it reverts the scheduler parameter and shaper parameter to their preconfigured values for the participant.

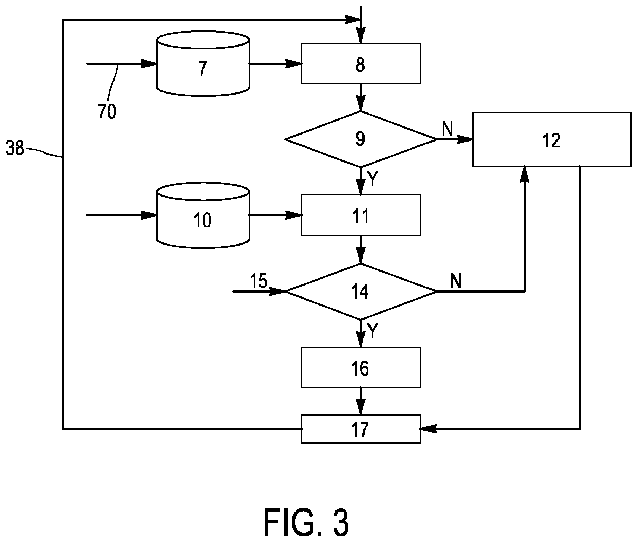

Figure 3 shows a flow diagram according to one example method implementation which apparatus 200 or 201 may perform.

In the example implementation shown in Figure 3, on regular time intervals, for example every 5 minutes, the step 8 of reading historical network-level consumption data 7 is performed. Step 9 consist of testing whether the risk of contention is above a first predetermined threshold, e.g. 80%. In the affirmative, it suggests that there is a risk that a state of contention will be reached. The historical bandwidth utilization data 10 of all the subscribers connected to the WFQ scheduler 6 is then retrieved at step 11. If at least one of the subscribers meets the intensive capacity consumption condition tested at step 14, its updated scheduler weight and shaper rate are determined at step 16 according to predefined rules 15 that ensure that the scheduler weight is decreased while the shaper rate is increased.

Step 8 may also consist of predicting contention in the next time interval based on past measurements. A time-series prediction module may be employed for that purpose, in order to react faster (reducing the loop reaction time), reducing further the contention time.

Specifically, any time-series prediction algorithm can be used, included but not limited to classical machine learning algorithms like moving averages (simple, weighted, exponential, ...) and regression (linear, auto-regression, ARIMA and variants), as well as deep learning techniques such as artificial neural networks, convolutional neural networks (CNN), recurrent neural networks (RNN), Long-Short Term Memory (LSTM), Temporal Convolutional network (TCN), regression trees, random forest, etc.

In this example, recent network-level consumption data 70 for previous time interval may be stored to form historical network-level consumption data 7. The prediction engine needs to be fed by the history (n last measured values) of the network-level consumption data 301 instead of just the latest measurement.

In case the test is negative at step 9 or 14, the step 12 is performed to restore the scheduler parameter and the shaper parameter to a default value. Namely, in case contention has ceased at step 12, the parameters can be restored for one or all participants. In case intensive capacity consumption has ceased for a given participant, the parameters can be restored for that participant. After waiting for a time interval at step 17, the method iterates to step 8 as shown by arrow 38.

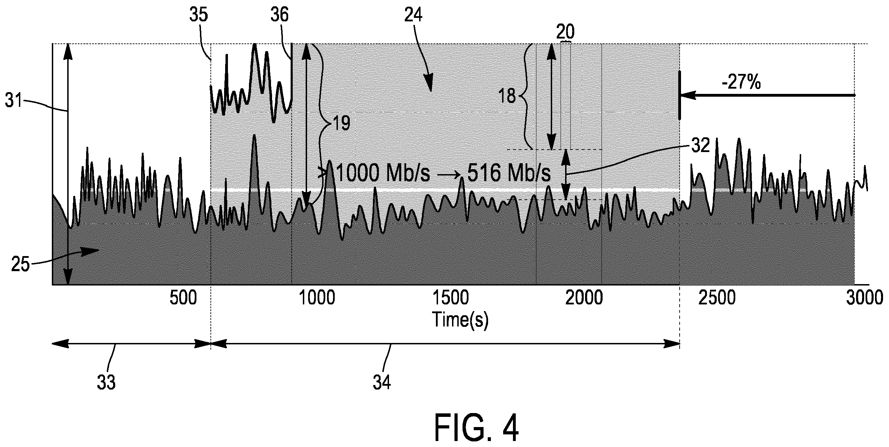

Figure 4 shows a possible bandwidth utilization result according to an example embodiment. An example bandwidth utilization of several users has been numerically simulated over certain period of time. The horizontal axis represents time in seconds. The vertical axis represents data-rate. In the example, the total PON capacity 31 is 2300 Mb/s.

In this example, 128 users are connected at the same time. There is a service specification defined by the operator that typically limits the subscriber data rate, for example, to 1 Gb/s, by way of the preconfigured shaper parameter. As 128 times 1Gb/s is much higher that 2.3 Gb/s, the PON is overbooked. When all subscribers have a normal usage pattern, this does not constitute a problem. Downloads at peak information rate (PIR) are typically short and rare and therefore these downloads typically do not overlap.

During a first time interval 33 126 normal users having an average PON utilization of 40% generate the data usage over time depicted by a first area 25. Despite the overbooking (126 times 1Gb/s >> 2.3 Gb/s), there is no network congestion. However, when a heavy user is added to the PON from instant 35, there is an atypical usage pattern of download at PIR during a second, long-lasting, time interval 34. The data usage of this heavy user over time is indicated as a second area 24. Another normal user performing a speedtest is added during a time interval 20 overlapping the time interval 34. The speed test is done by a short download at a data-rate 18.

In this example, the heavy user has been detected by the apparatus at instant 36, which has caused its shaper rate to be suddenly increased while its scheduler weight was reduced. For example, the shaper rate is increased from 1Gb/s to 2 Gb/s. Before instant 36, the data-rate 32 available to the heavy user was limited to 1 Gb/s and the full capacity of the PON was not used as a result. From instant 36, the increased shaper rate allows the heavy user to use all available capacity 19. In this way the duration of the long-lasting download 24 is optimized. By comparison, the duration of the long-lasting download 24 increases by 27% for the heavy user if the scheduler weight is reduced without increasing the shaper rate, in accordance with the prior art solution. This also means that the congestion risk period is optimized in the same way. And the benefit of the bandwidth allocation by the scheduler remains completely intact: the data rate 18 available to the normal user performing the speed test during the heavy use event is successful. During the time interval 20, the data-rate 32 available to the heavy user is temporarily reduced to 516 Mb/s.

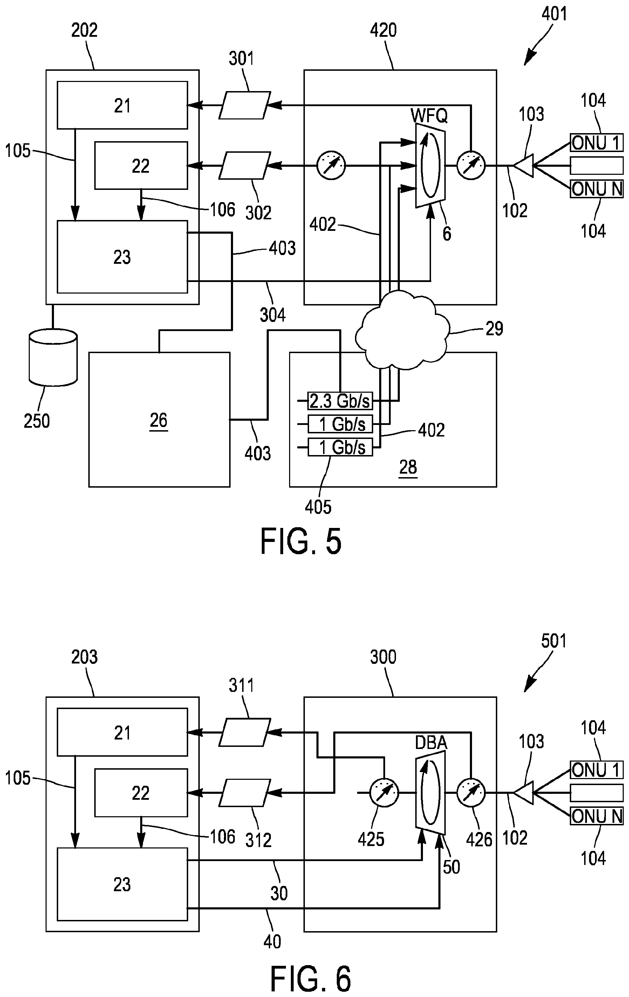

Figure 5 shows a functional block diagram of a passive optical network 401 according to another example embodiment employing an apparatus 202. Elements and functions that are identical or similar to those described in the embodiment of Fig. 2 are designated by the same numeral as in Fig. 2 and their description will not be repeated in this embodiment.

As shown in Figure 5, the shaper filters 405 are not implemented in the access node 420, but in a Border Network Gateway (BNG) 28 of the network instead. The Broadband Network Gateway 28 is connected to the access node 420 by an aggregation network 29 to provide the individual downstream traffic streams 402 to the access node 420. As a consequence, the regulation engine 23 of the apparatus 202 provides the updated shaper parameter 403 to the shaper filter 405 via an edge network controller 26.

Figure 6 shows a functional block diagram of a passive optical network 501 according to yet another example embodiment employing an apparatus 203. Elements and functions that are identical or similar to those described in the embodiment of Fig. 2 are designated by the same numeral as in Fig. 2 and their description will not be repeated in this embodiment.

In the embodiment of Figure 6, instead of controlling bandwidth allocation for downstream traffic of the passive optical network, the apparatus 203 interacts with a dynamic bandwidth allocation module 50 of the access node 300 to perform bandwidth allocation for upstream traffic. Contention module 21 determines whether the upstream direction of the optical network 501 is in a state of contention or at risk of entering such a state of contention from upstream network-level consumption data 311 provided by a measurement module 425. The heavy-use determination module 22 detects the or each participant meeting an intensive capacity consumption condition in the upstream direction using historical upstream bandwidth utilization data 312 provided by a measurement module 426. The regulation engine 23 provides an increased upstream maximum bandwidth 30 and a reduced upstream weight 40 to the dynamic bandwidth allocation 50 for a participant meeting the intensive capacity consumption in the upstream direction when the network is at risk of being congested in the upstream direction. . The rate shaping and weight scheduling are thus performed by the access node 300 in the upstream direction.

Similar as it is described for Figure 2, the entire workflow must be scheduled on regular time intervals, for example every 5 minutes.

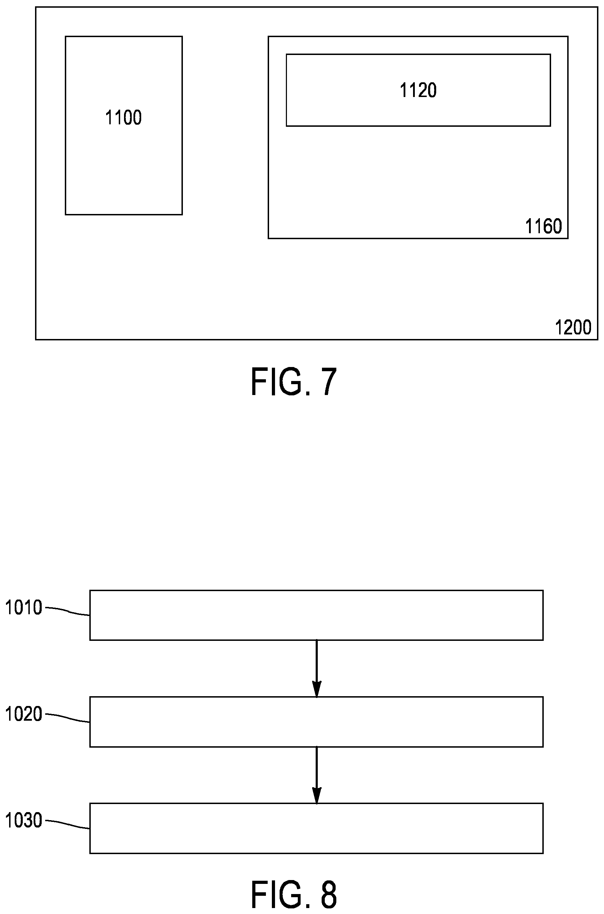

Figure 7 is a block diagram depicting the apparatus 1200 operating in accordance with an example embodiment. The block diagram may apply to any of the above-described apparatus 200, 201, 202 and 203. The apparatus 1200 may be, for example, an electronic device such as a chip, chip-set, an electronic device or an access network controller. The apparatus 1200 includes a processor 1110 and a memory 1160. In other examples, the apparatus 1200 may comprise multiple processors.

In the example of Figure 7, the processor 1110 is a control unit operatively connected to read from and write to the memory 1160. The processor 1110 may also be configured to receive control signals received via an input interface and/or the processor 1110 may be configured to output control signals via an output interface. In an example embodiment the processor 1110 may be configured to convert the received control signals into appropriate commands for controlling functionalities of the apparatus.

The memory 1160 stores computer program instructions 1120 which when loaded into the processor 1110 control the operation of the apparatus 1200 as explained above. In other examples, the apparatus 1200 may comprise more than one memory 1160 or different kinds of storage devices.

Computer program instructions 1120 for enabling implementations of example embodiments of the invention or a part of such computer program instructions may be loaded onto the apparatus 1200 by the manufacturer of the apparatus 1200, by a user of the apparatus 1200, or by the apparatus 1200 itself based on a download program, or the instructions can be pushed to the apparatus 1200 by an external device. The computer program instructions may arrive at the apparatus 200 via an electromagnetic carrier signal or be copied from a physical entity such as a computer program product, a memory device or a record medium such as a Compact Disc (CD), a Compact Disc Read- Only Memory (CDROM), a Digital Versatile Disk (DVD) or a Blu-ray disk.

According to an example embodiment, the apparatus 1200 comprises means, wherein the means comprises at least one processor 1110, at least one memory 1160 including computer program code 1120, the at least one memory 1160 and the computer program code 1120 configured to, with the at least one processor 1110, cause the performance of the apparatus 1200.

Figure 8 illustrates an example method 1000 incorporating aspects of the previously disclosed embodiments.

The method starts with obtaining 1010 an indication of contention of a communications network. The method continues with obtaining 1020 a historical bandwidth utilization indication parameter of respective participants of the communications network. The method further continues with, in response to determining, based on the indication of contention and the historical bandwidth utilization indication, that a participant meets an intensive capacity consumption condition, 1030 providing a reduced scheduler parameter and an increased maximum bandwidth parameter to an output of the apparatus, wherein the scheduler parameter and the shaper parameter relate to allocating bandwidth to the participant meeting the intensive capacity consumption condition

A skilled person shall understand that the sequence of the method is not limited to the illustrated example. The method may be implemented in other sequence. For example, the indication of contention and the historical bandwidth utilization indication may be obtained together in one step or the historical bandwidth utilization indication may be obtained prior to the indication of contention.

Without in any way limiting the scope, interpretation, or application of the claims appearing below, a technical effect of one or more of the example embodiments disclosed herein is that the bandwidth allocated to the participant meeting an intensive capacity consumption condition when the network is in a state of contention or at risk of contention can be adjusted so that the reduction applied to his scheduler weight is compensated by the increase of his shaper rate, thus limiting the impact of the reduction applied to his bandwidth. The bandwidth allocation can therefore adapt to a sudden speed test or quick download by a second network participant, while assuring normal attribution of bandwidth to all other users. Thus, a closed-loop automation is provided, and a user fairness can be provided.

Example embodiments may be applied to both upstream and downstream bandwidth allocation.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer- readable medium' may be any media or means that can contain, store, communicate, propagate or transport the instructions for use by or in connection with an instruction execution system, apparatus, or device, such as a computer, with one example of a computer described and depicted in Figure 7. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

## Claims

1. An apparatus (200, 201, 202, 203) for allocating bandwidth, comprising means for:
- obtaining an indication of contention (105) of a communications network (100, 101, 401, 501);
- obtaining a historical bandwidth utilization indication parameter (302, 312) of respective participants (131, 132, 133; 104) of the communications network;
- in response to determining, based on the indication of contention (105) and the historical bandwidth utilization indication (302, 312), that a participant meets an intensive capacity consumption condition, providing a reduced value of a scheduler parameter (304, 30) and an increased value of a maximum bandwidth parameter (303, 403, 40) to an output of the apparatus, wherein the scheduler parameter and the maximum bandwidth parameter are related to allocating bandwidth to the participant meeting the intensive capacity consumption condition, wherein the scheduler parameter represents a proportion of a capacity of the communications network (100, 101, 401, 501) allocated to the participant when the communications network is congested, wherein the reduced value is lower than a preconfigured value of the scheduler parameter,
wherein the maximum bandwidth parameter represents a maximum bandwidth allocated to the participant, wherein the increased value is higher than a preconfigured value of the maximum bandwidth parameter.

2. The apparatus (200, 201, 202, 203) according to claim 1, wherein the means are further configured to:
in response to determining, based on the historical bandwidth utilization indication (302, 312), that the participant has ceased to meet the intensive capacity consumption condition, restoring the scheduler parameter to the preconfigured value of the scheduler parameter and/or restoring the maximum bandwidth parameter to the preconfigured value of the maximum bandwidth parameter.

3. The apparatus (200, 201, 202, 203) according to claim 1 or 2, wherein the means are further configured to:
in response to determining that contention of the communications network has ceased, restoring the scheduler parameter to the preconfigured value of the scheduler parameter and/or restoring the maximum bandwidth parameter to the preconfigured value of the maximum bandwidth parameter.

4. The apparatus according to any one of the claims 1 to 3, wherein the means are further configured for:
predicting a risk of contention based on history of an average data rate (7) in the communications network;
providing the indication of contention in response to determining that the predicted risk of contention exceeds a defined threshold.

5. The apparatus according to claim 4, wherein the means are further configured for implementing a machine-learning algorithm for predicting the risk of contention based on measurements of the average data rate in the communications network.

6. The apparatus according to any one of claims 1 to 5, wherein the means are further configured for:
obtaining the historical bandwidth utilization indication over a plurality of rolling time windows;
determining that a participant meets the intensive capacity consumption condition in case a data volume consumed by the participant during at least one of the rolling time windows exceeds a reference data volume.

7. The apparatus according to any one of claims 1 to 6, wherein the means are configured for testing whether the participant meets the intensive capacity consumption condition in response to the indication of contention.

8. The apparatus according to any one of claims 1 to 7, wherein the communications network is a passive optical network (201, 401) , wherein the scheduler parameter and the maximum bandwidth parameter are related to allocating downstream bandwidth to the participant.

9. The apparatus according to claim 8, wherein the scheduler parameter indicates a weight allocated to the participant of the communications network for use in a Weighted Fair Queue scheduler (6), wherein the Weighted Fair Queue scheduler is arranged in a network line termination (320, 420) of the passive optical network.

10. The apparatus according to claim 8 or 9, wherein the maximum bandwidth parameter is a shaper parameter for use in a traffic shaper, wherein the traffic shaper is arranged in one of: a network line termination (320) of the passive optical network and a broadband network gateway (28) connected to the network line termination (420).

11. The apparatus according to any one of claims 1 to 7, wherein the communications network is a passive optical network (501), wherein the scheduler parameter and the maximum bandwidth parameter are related to allocating upstream bandwidth to the participant, wherein the scheduler parameter and maximum bandwidth parameter are for use in a Dynamic bandwidth allocation module (50), wherein the Dynamic bandwidth allocation module is arranged in a network line termination of the passive optical network.

12. The apparatus according to any one of claims 1 to 11, wherein the participant of the communications network is one of: a subscriber of a network operator, a virtual network operator and a subscriber of the virtual network operator.

13. The apparatus of any one of claims 1 to 12, wherein the means comprises at least one processor (1110); and at least one memory (1160) including computer program code (1120), the at least one memory and computer program code configured to, with the at least one processor, cause the performance of the apparatus.

14. A computer-implemented method for allocating bandwidth in an apparatus, comprising:
obtaining (9) an indication of contention of a communications network;
obtaining (11) a historical bandwidth utilization indication parameter of respective participants of the communications network;
in response to determining (14), based on the indication of contention and the historical bandwidth utilization indication (15), that a participant meets an intensive capacity consumption condition, providing (16) a reduced value of a scheduler parameter and an increased value of a maximum bandwidth parameter to an output of the apparatus, wherein the scheduler parameter and the maximum bandwidth parameter are related to allocating bandwidth to the participant meeting the intensive capacity consumption condition, wherein the scheduler parameter represents a proportion of a capacity of the communications network allocated to the participant when the communications network is congested, wherein the reduced value is lower than a preconfigured value of the scheduler parameter,
wherein the maximum bandwidth parameter represents a maximum bandwidth allocated to the participant, wherein the increased value is higher than a preconfigured value of the maximum bandwidth parameter.

15. A computer program comprising instructions for causing an apparatus to perform at least the following:
obtaining an indication of contention of a communications network (100, 101, 401, 501);
obtaining a historical bandwidth utilization indication parameter (10, 302, 312) of respective participants of the communications network;
in response to determining, based on the indication of contention (105) and the historical bandwidth utilization indication, that a participant meets an intensive capacity consumption condition, providing a reduced value of a scheduler parameter (304, 30) and an increased value of a maximum bandwidth parameter (303, 403, 40) to an output of the apparatus, wherein the scheduler parameter and the maximum bandwidth parameter are related to allocating bandwidth to the participant meeting the intensive capacity consumption condition, wherein the scheduler parameter represents a proportion of a capacity of the communications network allocated to the participant when the communications network is congested, wherein the reduced value is lower than a preconfigured value of the scheduler parameter,
wherein the maximum bandwidth parameter represents a maximum bandwidth allocated to the participant, wherein the increased value is higher than a preconfigured value of the maximum bandwidth parameter.

## Patentansprüche

1. Einrichtung (200, 201, 202, 203) zum Zuteilen einer Bandbreite, die Mittel für Folgendes umfasst:
- Erhalten einer Anzeige eines Konflikts (105) eines Kommunikationsnetzwerks (100, 101, 401, 501);
- Erhalten eines historischen Bandbreitennutzungsanzeigeparameters (302, 312) von jeweiligen Teilnehmern (131, 132, 133; 104) des Kommunikationsnetzwerks;
- in Reaktion auf das Bestimmen auf Basis der Anzeige des Konflikts (105) und der historischen Bandbreitennutzungsanzeige (302, 312), dass ein Teilnehmer eine Bedingung für einen intensiven Kapazitätsverbrauch erfüllt, Bereitstellen eines reduzierten Wertes eines Planerparameters (304, 30) und eines erhöhten Wertes eines maximalen Bandbreitenparameters (303, 403, 40) für einen Ausgang der Einrichtung, wobei sich der Planerparameter und der maximale Bandbreitenparameter auf das Zuteilen einer Bandbreite zum Teilnehmer beziehen, der die Bedingung für den intensiven Kapazitätsverbrauch erfüllt, wobei der Planerparameter einen Anteil einer Kapazität des Kommunikationsnetzwerks (100, 101, 401, 501) repräsentiert, der dem Teilnehmer zugeteilt ist, wenn das Kommunikationsnetzwerk überlastet ist, wobei der reduzierte Wert niedriger ist als ein vorausgelegter Wert des Planerparameters,
wobei der maximale Bandbreitenparameter eine maximale Bandbreite repräsentiert, die dem Teilnehmer zugeteilt ist, wobei der erhöhte Wert höher ist als ein vorausgelegter Wert des maximalen Bandbreitenparameters.

2. Einrichtung (200, 201, 202, 203) nach Anspruch 1, wobei die Mittel ferner zu Folgendem ausgelegt sind:
in Reaktion auf das Bestimmen auf Basis der historischen Bandbreitennutzungsanzeige (302, 312), dass der Teilnehmer die Bedingung für den intensiven Kapazitätsverbrauch nicht mehr erfüllt, Wiederherstellen des Planerparameters auf dem vorausgelegten Wert des Planerparameters und/oder Wiederherstellen des maximalen Bandbreitenparameters auf dem vorausgelegten Wert des maximalen Bandbreitenparameters.

3. Einrichtung (200, 201, 202, 203) nach Anspruch 1 oder 2, wobei die Mittel ferner zu Folgendem ausgelegt sind:
in Reaktion auf das Bestimmen, dass der Konflikt des Kommunikationsnetzwerks beendet ist, Wiederherstellen des Planerparameters auf dem vorausgelegten Wert des Planerparameters und/oder Wiederherstellen des maximalen Bandbreitenparameters auf dem vorausgelegten Wert des maximalen Bandbreitenparameters.

4. Einrichtung nach einem der Ansprüche 1 bis 3, wobei die Mittel ferner zu Folgendem ausgelegt sind:
Vorhersagen eines Risikos für einen Konflikt auf Basis eines Verlaufs einer durchschnittlichen Datenrate (7) im Kommunikationsnetzwerk;
Bereitstellen der Anzeige des Konflikts in Reaktion auf das Bestimmen, dass das vorhergesagte Risiko eines Konflikts einen definierten Schwellwert überschreitet.

5. Einrichtung nach Anspruch 4, wobei die Mittel ferner zum Implementieren eines Maschinenlernalgorithmus zum Vorhersagen eines Risikos eines Konflikts auf Basis von Messungen der durchschnittlichen Datenrate im Kommunikationsnetzwerk ausgelegt sind.

6. Einrichtung nach einem der Ansprüche 1 bis 5, wobei die Mittel ferner zu Folgendem ausgelegt sind:
Erhalten der historischen Bandbreitennutzungsanzeige über eine Vielzahl von gleitenden Zeitfenstern;
Bestimmen, dass ein Teilnehmer die Bedingung für den intensiven Kapazitätsverbrauch erfüllt, in einem Fall, in dem ein Datenvolumen, das vom Teilnehmer während mindestens eines gleitenden Zeitfensters verbraucht wird, ein Referenzdatenvolumen überschreitet.

7. Einrichtung nach einem der Ansprüche 1 bis 6, wobei die Mittel in Reaktion auf die Anzeige eines Konflikts zum Testen, ob der Teilnehmer die Bedingung für den intensiven Kapazitätsverbrauch erfüllt, ausgelegt sind.

8. Einrichtung nach einem der Ansprüche 1 bis 7, wobei das Kommunikationsnetzwerk ein passives optisches Netzwerk (201, 401) ist, wobei sich der Planerparameter und der maximale Bandbreitenparameter auf das Zuteilen einer Downstreambandbreite zum Teilnehmer beziehen.

9. Einrichtung nach Anspruch 8, wobei der Planerparameter eine Gewichtung anzeigt, die dem Teilnehmer des Kommunikationsnetzwerks zur Verwendung in einem Weighted-Fair-Queue-Planer (6) zugeteilt ist, wobei der Weighted-Fair-Queue-Planer in einem Netzwerkleitungsabschluss (320, 420) des passiven optischen Netzwerks angeordnet ist.

10. Einrichtung nach Anspruch 8 oder 9, wobei der maximale Bandbreitenparameter ein Formerparameter zur Verwendung in einem Verkehrsformer ist, wobei der Verkehrsformer in einem von Folgendem angeordnet ist: einem Netzwerkleitungsabschluss (320) des passiven optischen Netzwerks und einem Breitbandnetzwerkgateway (28), das mit dem Netzwerkleitungsabschluss (420) verbunden ist.

11. Einrichtung nach einem der Ansprüche 1 bis 7, wobei das Kommunikationsnetzwerk ein passives optisches Netzwerk (501) ist, wobei sich der Planerparameter und der maximale Bandbreitenparameter auf das Zuteilen einer Upstreambandbreite zum Teilnehmer beziehen, wobei der Planerparameter und der maximale Bandbreitenparameter der Verwendung in einem dynamischen Bandbreitenzuteilungsmodul (50) dienen, wobei das dynamische Bandbreitenzuteilungsmodul in einem Netzwerkleitungsabschluss des passiven optischen Netzwerks angeordnet ist.

12. Einrichtung nach einem der Ansprüche 1 bis 11, wobei der Teilnehmer des Kommunikationsnetzwerks eines von Folgendem ist: einem Subskribient eines Netzwerkbetreibers, einem virtuellen Netzwerkbetreiber und einem Subskribient des virtuellen Netzwerkbetreibers.

13. Einrichtung nach einem der Ansprüche 1 bis 12, wobei die Mittel mindestens einen Prozessor (1110); und mindestens einen Speicher (1160), der Computerprogrammcode (1120) beinhaltet, umfassen, wobei der mindestens eine Speicher und der Computerprogrammcode dazu ausgelegt sind, mit dem mindestens einen Prozessor die Durchführung der Einrichtung zu veranlassen.

14. Computerimplementiertes Verfahren zum Zuteilen einer Bandbreite in einer Einrichtung, das Folgendes umfasst:
Erhalten (9) einer Anzeige eines Konflikts eines Kommunikationsnetzwerks;
Erhalten (11) eines historischen Bandbreitennutzungsanzeigeparameters von jeweiligen Teilnehmern des Kommunikationsnetzwerks;
in Reaktion auf das Bestimmen (14) auf Basis der Anzeige des Konflikts und der historischen Bandbreitennutzungsanzeige (15), dass ein Teilnehmer eine Bedingung für einen intensiven Kapazitätsverbrauch erfüllt, Bereitstellen (16) eines reduzierten Wertes eines Planerparameters und eines erhöhten Wertes eines maximalen Bandbreitenparameters für einen Ausgang der Einrichtung, wobei sich der Planerparameter und der maximale Bandbreitenparameter auf das Zuteilen einer Bandbreite zum Teilnehmer beziehen, der die Bedingung für den intensiven Kapazitätsverbrauch erfüllt, wobei der Planerparameter einen Anteil einer Kapazität des Kommunikationsnetzwerks repräsentiert, der dem Teilnehmer zugeteilt ist, wenn das Kommunikationsnetzwerk überlastet ist, wobei der reduzierte Wert niedriger ist als ein vorausgelegter Wert des Planerparameters,
wobei der maximale Bandbreitenparameter eine maximale Bandbreite repräsentiert, die dem Teilnehmer zugeteilt ist, wobei der erhöhte Wert höher ist als ein vorausgelegter Wert des maximalen Bandbreitenparameters.

15. Computerprogramm, das Anweisungen zum Veranlassen einer Einrichtung, mindestens Folgendes durchzuführen, umfasst:
Erhalten einer Anzeige eines Konflikts eines Kommunikationsnetzwerks (100, 101, 401, 501);
Erhalten eines historischen Bandbreitennutzungsanzeigeparameters (10, 302, 312) von jeweiligen Teilnehmern des Kommunikationsnetzwerks;
in Reaktion auf das Bestimmen auf Basis der Anzeige des Konflikts (105) und der historischen Bandbreitennutzungsanzeige, dass ein Teilnehmer eine Bedingung für einen intensiven Kapazitätsverbrauch erfüllt, Bereitstellen eines reduzierten Wertes eines Planerparameters (304, 30) und eines erhöhten Wertes eines maximalen Bandbreitenparameters (303, 403, 40) für einen Ausgang der Einrichtung, wobei sich der Planerparameter und der maximale Bandbreitenparameter auf das Zuteilen einer Bandbreite zum Teilnehmer beziehen, der die Bedingung für den intensiven Kapazitätsverbrauch erfüllt, wobei der Planerparameter einen Anteil einer Kapazität des Kommunikationsnetzwerks repräsentiert, der dem Teilnehmer zugeteilt ist, wenn das Kommunikationsnetzwerk überlastet ist, wobei der reduzierte Wert niedriger ist als ein vorausgelegter Wert des Planerparameters,
wobei der maximale Bandbreitenparameter eine maximale Bandbreite repräsentiert, die dem Teilnehmer zugeteilt ist, wobei der erhöhte Wert höher ist als ein vorausgelegter Wert des maximalen Bandbreitenparameters.

## Revendications

1. Appareil (200, 201, 202, 203) pour allouer une bande passante, comprenant des moyens pour :
- obtenir une indication de contention (105) d'un réseau de communication (100, 101, 401, 501) ;
- obtenir un paramètre d'indication d'utilisation de bande passante historique (302, 312) de participants (131, 132, 133 ; 104) respectifs du réseau de communication ;
- lorsqu'il est déterminé, sur la base de l'indication de contention (105) et de l'indication d'utilisation de bande passante historique (302, 312), qu'un participant satisfait à une condition de consommation de capacité intensive, fournir une valeur réduite d'un paramètre de planificateur (304, 30) et une valeur augmentée d'un paramètre de bande passante maximale (303, 403, 40) à une sortie de l'appareil, dans lequel le paramètre de planificateur et le paramètre de bande passante maximale sont liés à l'allocation de bande passante au participant satisfaisant à la condition de consommation de capacité intensive, dans lequel le paramètre de planificateur représente une proportion d'une capacité du réseau de communication (100, 101, 401, 501) allouée au participant lorsque le réseau de communication est encombré, dans lequel la valeur réduite est inférieure à une valeur préconfigurée du paramètre de planificateur,
dans lequel le paramètre de bande passante maximale représente une bande passante maximale allouée au participant, dans lequel la valeur augmentée est supérieure à une valeur préconfigurée du paramètre de bande passante maximale.

2. Appareil (200, 201, 202, 203) selon la revendication 1, dans lequel les moyens sont en outre configurés pour :
lorsqu'il est déterminé, sur la base de l'indication d'utilisation de bande passante historique (302, 312), que le participant a cessé de satisfaire à la condition de consommation de capacité intensive, restaurer le paramètre de planificateur à la valeur préconfigurée du paramètre de planificateur et/ou restaurer le paramètre de bande passante maximale à la valeur préconfigurée du paramètre de bande passante maximale.

3. Appareil (200, 201, 202, 203) selon la revendication 1 ou 2, dans lequel les moyens sont en outre configurés pour :
lorsqu'il est déterminé que la contention du réseau de communication a cessé, restaurer le paramètre de planificateur à la valeur préconfigurée du paramètre de planificateur et/ou restaurer le paramètre de bande passante maximale à la valeur préconfigurée du paramètre de bande passante maximale.

4. Appareil selon l'une des revendications 1 à 3, dans lequel les moyens sont en outre configurés pour :
prédire un risque de contention sur la base de l'historique d'un débit de données moyen (7) dans le réseau de communication ;
fournir l'indication de contention lorsqu'il est déterminé que le risque de contention prédit dépasse un seuil défini.

5. Appareil selon la revendication 4, dans lequel les moyens sont en outre configurés pour mettre en œuvre un algorithme d'apprentissage machine pour prédire le risque de contention sur la base de mesures du débit de données moyen dans le réseau de communication.

6. Appareil selon l'une des revendications 1 à 5, dans lequel les moyens sont en outre configurés pour :
obtenir l'indication d'utilisation de bande passante historique sur une pluralité de fenêtres temporelles glissantes ;
déterminer qu'un participant satisfait à la condition de consommation de capacité intensive dans le cas où un volume de données consommé par le participant pendant au moins une des fenêtres temporelles glissantes dépasse un volume de données de référence.

7. Appareil selon l'une des revendications 1 à 6, dans lequel les moyens sont configurés pour tester si le participant satisfait à la condition de consommation de capacité intensive en réponse à l'indication de contention.

8. Appareil selon l'une des revendications 1 à 7, dans lequel le réseau de communication est un réseau optique passif (201, 401), dans lequel le paramètre de planificateur et le paramètre de bande passante maximale sont liés à l'allocation de bande passante en aval au participant.

9. Appareil selon la revendication 8, dans lequel le paramètre de planificateur indique un poids alloué au participant du réseau de communication à utiliser dans un planificateur de file d'attente équitable pondérée (6), dans lequel le planificateur de file d'attente équitable pondérée est agencé dans une terminaison de ligne réseau (320, 420) du réseau optique passif.

10. Appareil selon la revendication 8 ou 9, dans lequel le paramètre de bande passante maximale est un paramètre de dispositif de mise en forme à utiliser dans un dispositif de mise en forme de trafic, dans lequel le dispositif de mise en forme de trafic est agencé dans une parmi : une terminaison de ligne réseau (320) du réseau optique passif et une passerelle réseau à large bande (28) connectée à la terminaison de ligne réseau (420).

11. Appareil selon l'une des revendications 1 à 7, dans lequel le réseau de communication est un réseau optique passif (501), dans lequel le paramètre de planificateur et le paramètre de bande passante maximale sont liés à l'allocation de bande passante en amont au participant, dans lequel le paramètre de planificateur et le paramètre de bande passante maximale sont destinés à être utilisés dans un module d'allocation de bande passante dynamique (50), dans lequel le module d'allocation de bande passante dynamique est agencé dans une terminaison de ligne réseau du réseau optique passif.

12. Appareil selon l'une des revendications 1 à 11, dans lequel le participant du réseau de communication est un parmi : un abonné d'un opérateur de réseau, un opérateur de réseau virtuel et un abonné de l'opérateur de réseau virtuel.

13. Appareil de l'une des revendications 1 à 12, dans lequel les moyens comprennent au moins un processeur (1110) ; et au moins une mémoire (1160) comportant un code de programme informatique (1120), l'au moins une mémoire et le code de programme informatique étant configurés pour, avec l'au moins un processeur, provoquer la performance de l'appareil.

14. Procédé mis en œuvre par ordinateur pour allouer une bande passante dans un appareil comprenant :
l'obtention (9) d'une indication de contention d'un réseau de communication ;
l'obtention (11) d'un paramètre d'indication d'utilisation de bande passante historique de participants respectifs du réseau de communication ;
lorsqu'il est déterminé (14), sur la base de l'indication de contention et de l'indication d'utilisation de bande passante historique (15), qu'un participant satisfait à une condition de consommation de capacité intensive, la fourniture (16) d'une valeur réduite d'un paramètre de planificateur et une valeur augmentée d'un paramètre de bande passante maximale à une sortie de l'appareil, dans lequel le paramètre de planificateur et le paramètre de bande passante maximale sont liés à l'allocation de bande passante au participant satisfaisant à la condition de consommation de capacité intensive, dans lequel le paramètre de planificateur représente une proportion d'une capacité du réseau de communication allouée au participant lorsque le réseau de communication est encombré, dans lequel la valeur réduite est inférieure à une valeur préconfigurée du paramètre de planificateur,
dans lequel le paramètre de bande passante maximale représente une bande passante maximale allouée au participant, dans lequel la valeur augmentée est supérieure à une valeur préconfigurée du paramètre de bande passante maximale.

15. Programme informatique comprenant des instructions pour amener un appareil à effectuer au moins les opérations suivantes :
obtenir une indication de contention d'un réseau de communication (100, 101, 401, 501) ;
obtenir un paramètre d'indication d'utilisation de bande passante historique (10, 302, 312) de participants respectifs du réseau de communication ;
- lorsqu'il est déterminé, sur la base de l'indication de contention (105) et de l'indication d'utilisation de bande passante historique, qu'un participant satisfait à une condition de consommation de capacité intensive, fournir une valeur réduite d'un paramètre de planificateur (304, 30) et une valeur augmentée d'un paramètre de bande passante maximale (303, 403, 40) à une sortie de l'appareil, dans lequel le paramètre de planificateur et le paramètre de bande passante maximale sont liés à l'allocation de bande passante au participant satisfaisant à la condition de consommation de capacité intensive, dans lequel le paramètre de planificateur représente une proportion d'une capacité du réseau de communication allouée au participant lorsque le réseau de communication est encombré, dans lequel la valeur réduite est inférieure à une valeur préconfigurée du paramètre de planificateur,
dans lequel le paramètre de bande passante maximale représente une bande passante maximale allouée au participant, dans lequel la valeur augmentée est supérieure à une valeur préconfigurée du paramètre de bande passante maximale.
